# EUROPEAN PATENT APPLICATION

(11) **EP 4 656 875 A1**
(43) Date of publication of application: **03.12.2025**
(21) Application number: 24189838.6
(22) Date of filing: 19.07.2024
(51) Int. Cl.: F03D 9/25, F03D 13/20

(54) **WIND TURBINE**

(30) Priority: 26.05.2024 PL 44867624; 03.07.2024 EP 24186397
(71) Applicant: "Red Point" Spolka z Ograniczona Odpowiedzialnoscia, 05-410 Jozefow (PL)
(72) Inventor: JASTRZEBSKI, Arkadiusz, 05-410 Jozefow (PL)
(74) Representative: AOMB Polska Sp. z.o.o.

(57) **Abstract**

A wind turbine for generating electricity from wind, comprising a mast, an even number of wings symmetrically arranged relative to the mast, and an even number of rotors for generating electrical current, characterized in that the rotors are mounted on the ends of the wings, which have the shape of a polygon, and the rotors are mounted on the sides of the wings farthest from the mast, measured in a horizontal line, and the wings are attached to the mast in such a way that they rotate about the axis of the mast, wherein the wings symmetrically arranged relative to the mast with the mounted rotors are connected to each other by means of a connector, creating an angle that is in the range of 30-160 degrees.

## Description

### Field of technology

The object of the invention is a wind turbine using wing (sail) technology to generate electricity from wind energy both on land, on water and in the air.

### State of the art

A number of wind energy conversion systems are known from the state of the art, including vertical axis of rotation and horizontal axis of rotation turbines. Vertical-axis wind turbines are cheaper to manufacture than horizontal-axis turbines but have lower efficiency than them. The efficiency of vertical turbines is reduced by the air resistance of the turbine blades in the return motion, i.e. the movement of the turbine blades in the direction opposite to the direction the wind is blowing, for which reason some vertical turbines require an electric starter to set the turbine into its initial motion. In addition, in most vertical turbines it is not possible to adjust the rotor speed by changing the angle of attack of the blades. Horizontal axis wind turbines, on the other hand, offer the possibility of controlling the speed and generating power output by changing the angle of attack of the blade profile, but these are very expensive, large and heavy structures, and part of the energy from the wind is converted into kinetic energy for the movement of the large rotor blades, rather than for power generation. At the same time, the disposal of the rotor blades of horizontal turbines poses a major environmental problem, as they are manufactured from composite materials. From the state of the art, wind turbines are also known to use sail technology to increase the wind speed at the turbine rotor.

From US patent description US10221833B2A is know a wind energy system using conventional sail technology for domestic use. The system consists of a retractable, awning-like roof sail with side panels that allow wind to enter through a system of dampers that capture the pressure of wind energy. Energy is harvested by a small turbine that can be automatically adjusted for maximum efficiency depending on wind speed. The turbine uses the Venturi principle, increasing air velocities through the turbine and allowing greater energy extraction. The disadvantage of this solution is that the sail has to be retracted in bad weather conditions, resulting in an interruption of power generation. From another patent application US2012086214A1, a device for generating electricity from wind energy is known, characterized in that it comprises a sail member having a windward surface and a leeward surface and a wind turbine comprising a blade rotor configured to rotate about a central axis of rotation. The end or side edge of the sail member may be positioned near the outer periphery of the rotor blade wind turbine. Wind flowing substantially parallel to the central axis of rotation can create counterrotating vortices around the side edges, which spin and intensify the air flow through the bladed rotor of the wind turbine. A wind turbine containing a blade rotor can be rotationally controlled by a steerable motor so that it can be effectively removed or concealed in high wind conditions. Unfortunately, most of the solutions known to the state of the art prevent wind turbines from operating in adverse weather conditions. At lower wind speeds, turbine efficiency is negligible and above a certain wind speed the turbine must be stopped due to the possibility of damage. The limitations resulting from changing weather conditions at the wind turbine site have been solved in the design according to the invention.

The technical problem addressed by the solution according to the invention is that of achieving greater efficiency in catching and directing the wind to the rotor of the wind turbine. This problem is solved by the design of the wings (sails), which position themselves and the entire turbine in the right direction in relation to the wind direction and also at the proper angle in relation to each other.

### The essence of the invention

The essence of the solution according to the invention is a wind turbine for generating electricity from wind, comprising a mast, at least one wing and at least one rotor for generating electricity, characterized in that the rotor is mounted close to the edge of the wing, which wing is essentially polygonal in shape, and the rotor is mounted on one edge of the wing remote from the mast, the wing being attached to the mast so that it rotates about the axis of the mast.

Preferably comprising at least two wings and at least one rotor, the wings being on opposite sides of the mast and having the ability to move relative to each other to form a variable angle with each other and to position themselves on the leeward side of the mast according to the wind, and the value of the angle is in the range of 30 to 160 degrees.

Preferably, the wings are connected, directly or indirectly, by a variable or fixed-length connector, which is located on the windward or leeward side of the turbine.

Preferably, the connector is a telescopic guide with a system of springs that change the angle between the wings thanks to the elastic force and the force of the wind.

Preferably, the connector is a rigid rail running between the wings, wherein the edges of the wings with the rotor are movably attached to the rail by means of joints and moving on the rail, by means of motors attached to them.

Preferably, the connector comprises a boom, attached at one end to the mast by a gooseneck and loose at the other end, wherein the wings together with the rotors are attached in an articulated manner to the brackets connecting them to the boom, which brackets can move along the boom.

Preferably, the connector comprises a rigid part attached to the windward side and a system of ropes attached to the wings on one side and to the rope tensioning system on the other side.

Preferably, the current-generating rotor is a vertical rotor and is mounted in relation to the wing in such a way that a part of the rotor with blades extends beyond the outline of the wing and has direct exposure to the airflow directed to the rotor by the turbine wing, and the other part of the rotor with blades is hidden behind the wing and has no direct exposure to the airflow directed by the wing to the rotor.

Preferably, the wing is made of rigid material.

Preferably, the wing is made of a flexible material of the canvas type, with additional reinforcements in the form of frames crowning the wing along its perimeter.

Preferably, the wing is equipped with additional gutters directing the wind towards the rotors, extending along the sides of the wing between the mast and the rotor.

Preferably, additional rails are attached to the mast, to which rails the wing is attached.

Preferably, it has an additional counterweight placed on the opposite side of the mast in relation to the wing.

Preferably, the rotor has an additional shield located on the windward side, which shield together with the wing forms a gap through which the wind flow sets the rotor in motion, which additionally increases the speed of rotation of the rotor or rotors.

Preferably at least partially, any wing has a shape approximating a section of a spherical polygon which is at least partially concave and/or which is at least partially convex.

### Description of the figures

The object of the invention is illustrated in the figure, where
Fig. 1 shows a wind turbine in general view.

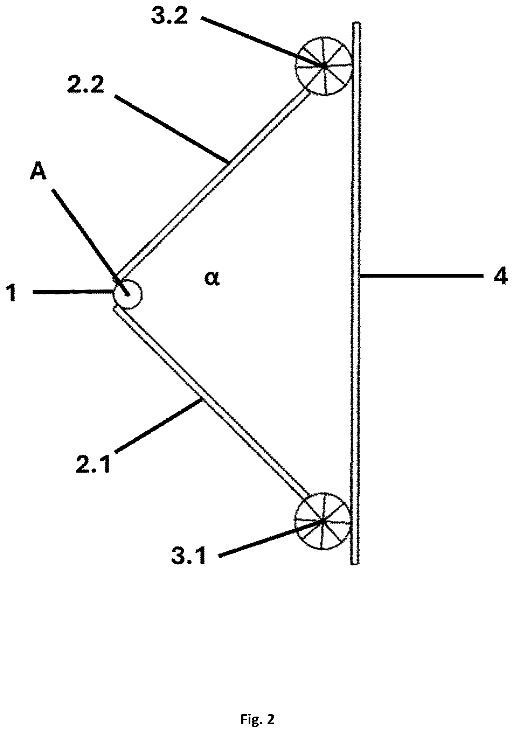

Fig. 2 shows a wind turbine in a general top view.

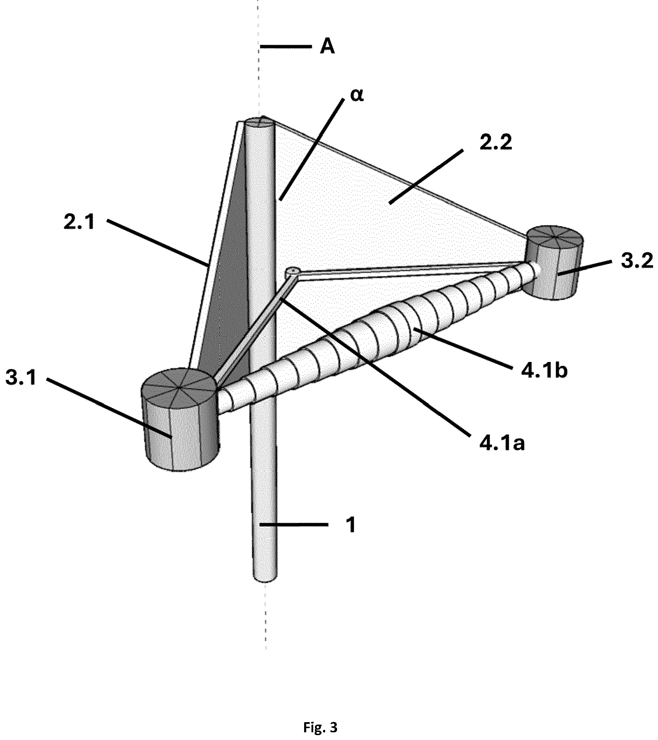

Fig. 3 shows a wind turbine with a telescopic guide with a spring system.
Fig. 4 shows a wind turbine with the motors attached to the rail by hinges.
Fig. 5 shows a wind turbine with a boom and joints connecting the wings and rotors to the mast.
Fig. 6 shows a wind turbine with reinforcements in the form of frames on the circumference of the wings.
Fig. 7 shows a wind turbine with wind-catching gutters.
Fig 8 shows a wind turbine with additional rails attaching the wings to the mast.
Figs. 9 and 10 show a wind turbine with a counterweight.
Figs. 11 and 12 show a wind turbine with rotor shields.
Fig. 13 shows a wind turbine with one wing and one rotor.
Fig. 14 shows a wind turbine with two wings and two rotors in general view.
Fig. 15 shows a turbine with rope tension system and a counterweight.

### Example of implementation

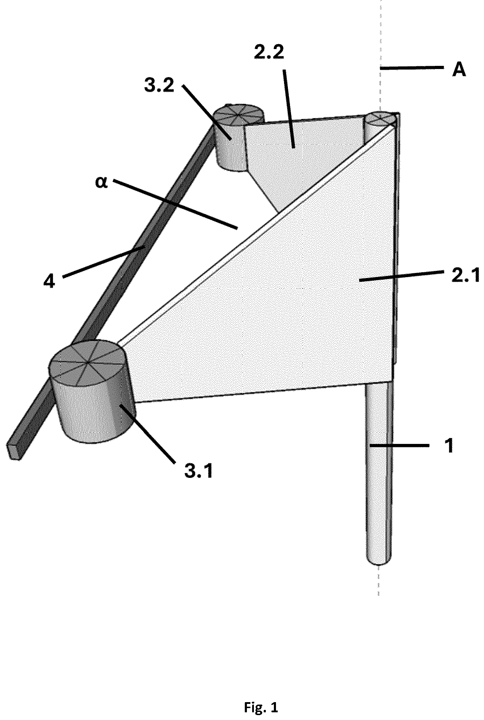

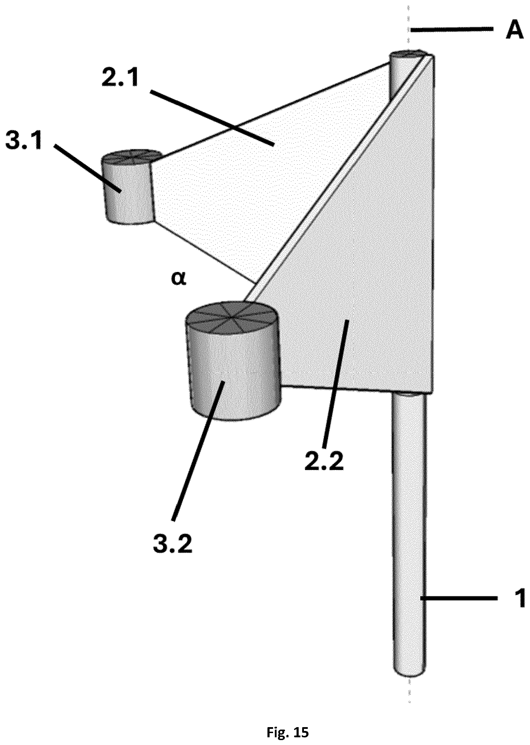

A wind turbine for obtaining electricity from the wind, consists of an essentially vertical mast 1 similar to that of a sailing ship, an even number of sail wings 2.1, 2.2 and an even number of rotors 3.1, 3.2 connected to each other by a connector 4 (Fig. 1, Fig. 15). Each pair of wings 2.1, 2.2 is attached to the mast 1 symmetrically with respect to each other, on both sides of the mast 1, so that they rotate about the axis A. Due to this arrangement of the wings with respect to the mast, the wind turbine automatically aligns itself in the correct direction with respect to the wind blowing. In addition, each symmetrical pair of wings aligns in relation to each other at a certain variable angle α, between 30 and 160 degrees depending on the strength of the wind. The purpose of the wings is to collect the wind force from the surfaces of the wings 2.1, 2.2 and to direct this wind to the rotors 3.1, 3.2 of the turbines, which are attached at the ends of the wings. The wings are polygonal in shape and the rotors are mounted on the sides lying furthest from the mast measured in a horizontal line. By directing the wind force from the large wing plane to where the turbine rotors are mounted, the wind speed at the rotors is many times greater than the speed of the atmospheric wind itself. As a result, the turbine operates at high speed and with high efficiency. In addition, the arrangement of the two symmetrical wings creates an air pressure differential between the outer side of the wing and the inner side of the wing. This pressure difference increases the speed of rotation of the rotor blades. The symmetrical turbine wings and rotors are connected to each other indirectly through additional components or directly by a connector 4, of variable or fixed length, which is located on the windward or leeward side of the turbine. Connector 4 is in the form of a telescopic guide 4.1a with a system of springs 4.1b which, thanks to the elastic force, slide down under the influence of wind pressure and bring the wings 2.1, 2.2 and the rotors 3.1, 3.2 closer to each other or move them apart from each other in low wind force. Connector 4 allows the wings to be folded and unfolded depending on the atmospheric wind speed.

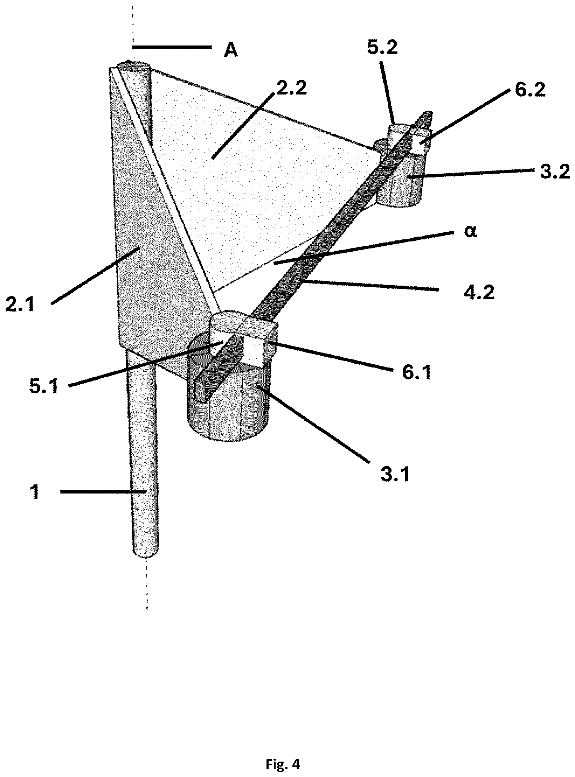

In a favorable example (Fig. 4) of the embodiment, the connector 4 is a rigid rail 4.2 running between the wings 2.1, 2.2, wherein the edges of the wings with the rotor 3.1, 3.2 are attached to the rail 4.2 movably by means of joints 5.1, 5.2 and move on the rail with respect to each other by means of motors 6.1, 6.2 attached to them.

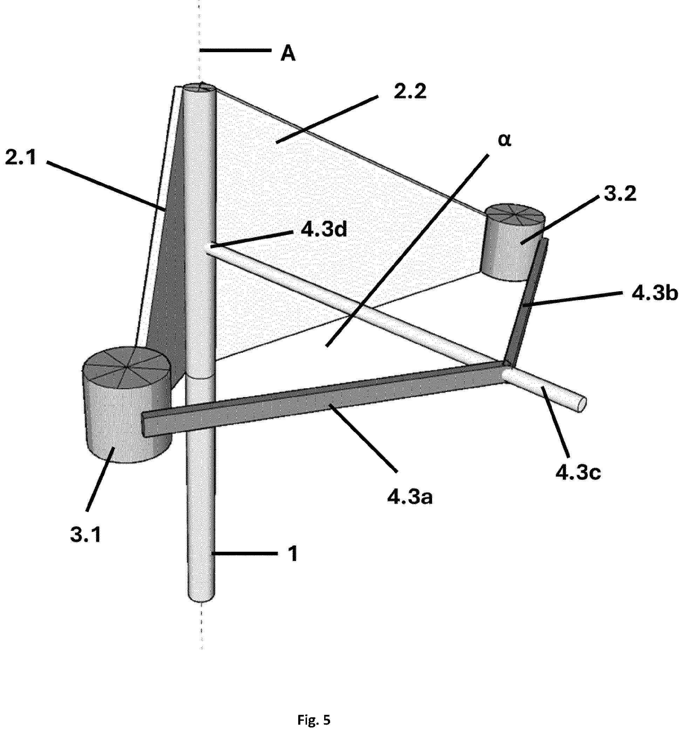

In an alternatively advantageous example (Fig. 5) of the embodiment, the connector 4 comprises a boom 4.3c, attached on one side by a gooseneck 4.3d to the mast 1 and loose on the other side, wherein the wings 2.1, 2.2 connected to the rotors 3.1, 3.2 are attached in an articulated manner to the brackets 4.3a, 4.3b connecting them to the boom 4.3c, which brackets can move along the boom.

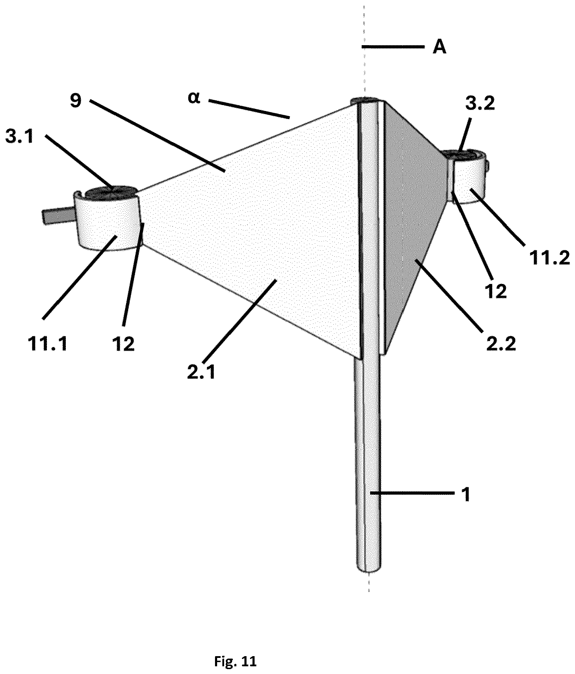

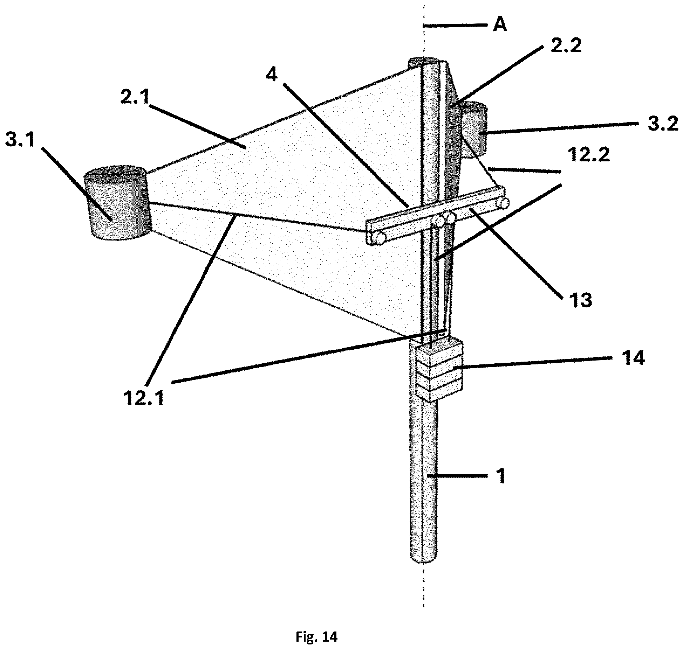

In an alternatively preferred embodiment, the connector 4 consists of a rigid part 13 mounted on the windward side and a rope system 12.1, 12.2 attached on one side to the wings 2.1, 2.2 and on the other side to the rope tensioning system 14 (Fig. 11, Fig. 12, Fig. 13, Fig. 14).

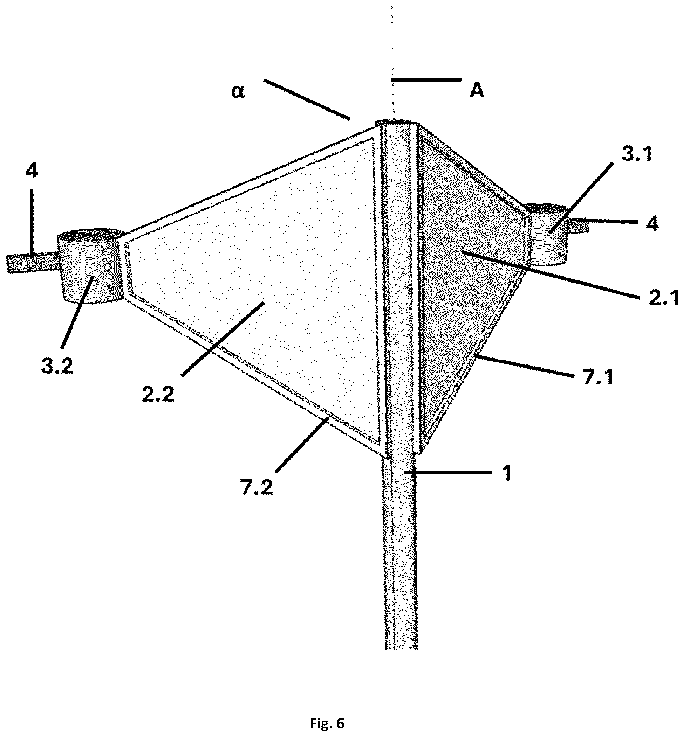

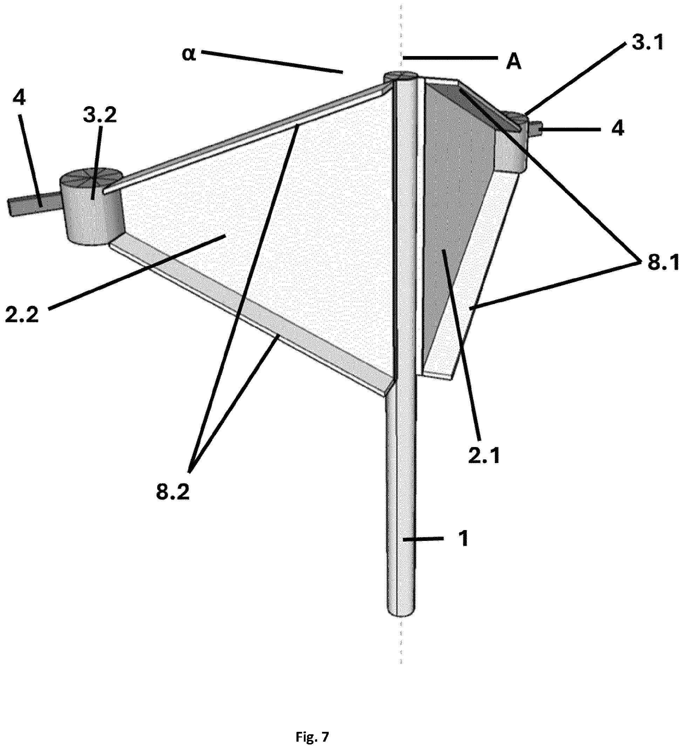

At lower wind speeds, the wings expand and a more obtuse angle is formed between them, allowing the wings to collect wind from a larger area which means that the rotors can operate effectively even in lower winds. In high winds, the wings fold into an acute angle, as there is no need to collect wind from a large area. The current-generating rotors 3.1, 3.2 are vertical rotors and are mounted in relation to the wings 2.1, 2.2 in such a way that a part of the rotor with the blades protrudes beyond the outline of the wing and has direct exposure to the airflow directed to the rotors by the turbine wings. The other part of the rotor with the blades is hidden behind the wing and has no direct exposure to the airflow directed by the wings to the rotor. This results in less friction of the air against the rotor blades being in the return motion and consequently such a design speeds up the rotational movement of the rotors. The wings 2.1, 2.2 are made of flexible canvas and contain reinforcements in the form of frames 7.1, 7.2 (Fig. 6) crowning the wings around their perimeter and are equipped with additional wind gutters directing the wind towards the rotors 8.1, 8.2 (Fig. 7) catching the wind, extending along the sides of the wings between the mast 1 and the rotors 3.1, 3.2. The wind turbine has a counterweight 10 located on the opposite side of the mast 1 with respect to the wings 2.1, 2.2. In an alternative preferred embodiment, additional rails 9 are attached to the mast 1, to which rails the wing 2.1, 2.2 is attached.

In the favorable design example, the turbine comprises one wing and one rotor. Solutions comprising more symmetrical wings or wings of different dimensions are also possible. In an advantageous design example, the rotor or rotors are only attached to some of the wings. The number of rotors and wings need not be the same.

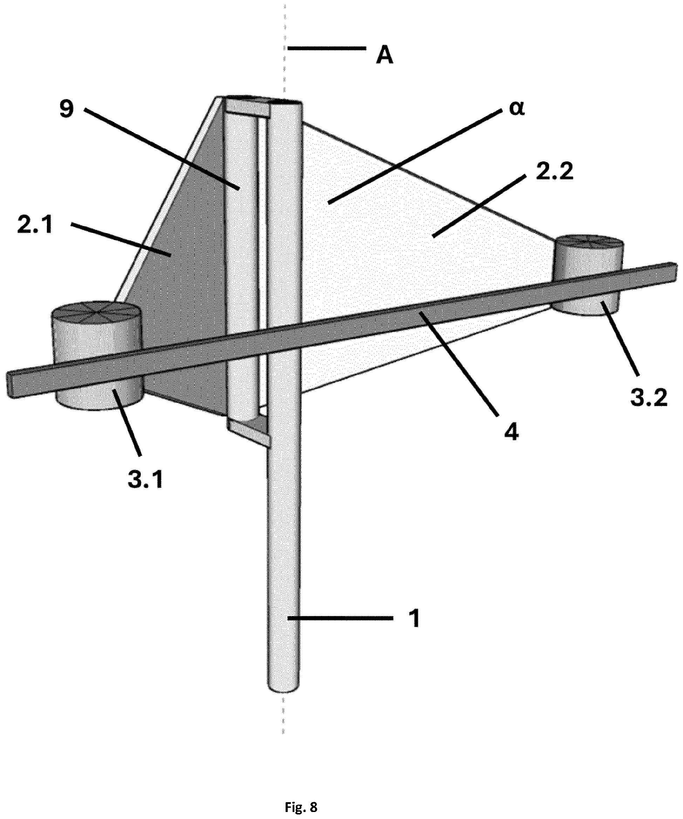

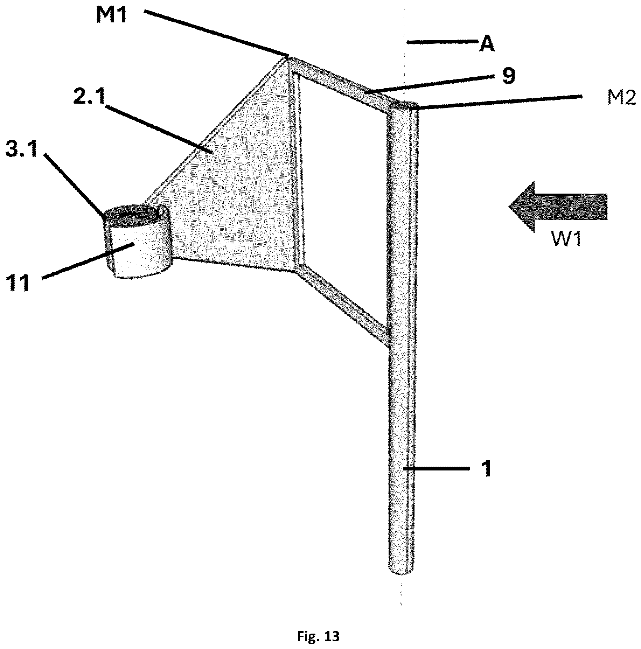

The favorable design example, illustrated in Fig. 13, uses one wing located on one side of the mast and a rigid or articulated attachment M1 between frame 9 (Fig. 8) and wing 2.1 and an articulated attachment on mast M2. The wind direction is indicated by the arrow W1.

The advantage of the solution according to the invention is the increased efficiency of wind turbines and their ability to operate in a larger wind range while reducing the cost of building the turbine. In addition, the turbine has a lightweight structure, is easy to assemble and transport due to the lack of large rotor blades, and the turbine wings are easily replaceable components and fairly cheap to manufacture and dispose of. The turbine can also be scaled: it can be a small turbine placed on the roof of a building or it can be a large offshore turbine placed, for example, on platforms anchored to the seabed. The attractive appearance and the absence of flickering shadow effect and noise are also undoubtedly advantages.

A wind turbine for generating electricity from wind, comprising a mast 1, at least one wing and at least one rotor for generating electricity, characterized in that the rotor is mounted close to the edge of the wing, which wing is essentially polygonal in shape, and the rotor is mounted on one edge of the wing distant from the mast 1, the wing being attached to the mast so that it rotates about the axis A of the mast,

In an advantageous example of the implementation, it comprises at least two wings 2.1, 2.2 and at least one rotor 3.1, 3.2, wherein the wings located on opposite sides of the mast are connected to each other by means of a connector 4, creating an angle α with respect to each other, which is in the range of 30-160 degrees.

In an advantageous example of the implementation, connector 4 is a telescopic guide 4.1b with a spring system 4.1a, which changes the angle α between the wings 2.1, 2.2 thanks to the elastic force and the wind force.

In an advantageous example of the implementation, the connector 4 is a rigid rail 4.2 connecting the wings 2.1, 2.2, wherein the edges of the wings with the rotor 3.1, 3.2 are attached to the rail 4.2 movably by means of joints 5.1, 5.2 and move on the rail in relation to each other by means of motors 6.1, 6.2 attached to them.

In an advantageous example of implementation, the connector comprises a boom 4.3c, attached on one side by a gooseneck 4.3d to the mast 1 and loose on the other side, wherein the wings 2.1, 2.2 together to the rotors 3.1, 3.2 are attached in an articulated manner to the brackets 4.3a, 4.3b connecting them to the boom 4.3c.

In an advantageous example of implementation, the rotor 3.1, 3.2 generating the current is a vertical rotor and is mounted in relation to the wing 2.1, 2.2 in such a way that a part of the rotor with blades protrudes beyond the outline of the wing and has direct exposure to the airflow directed to the rotor by the turbine wing, and the other part of the rotor with blades is hidden behind the wing and has no direct exposure to the airflow directed to the rotor by the wing.

In an advantageous example of implementation, the wing 2.1, 2.2 is made of rigid material.

In an advantageous example of implementation, the wing 2.1, 2.2 is made of flexible material of the canvas type, with additional reinforcements in the form of frames 7.1, 7.2 crowning the wing along its perimeter.

In an advantageous example of implementation, the wing 2.1, 2.2 is equipped with additional wind-catching gutters 8.1, 8.2 extending along the sides of the wing between mast 1 and rotor 3.1, 3.2.

In an advantageous example of implementation, additional rails 9 are attached to the mast 1, to which rails the wing 2.1, 2.2 is attached.

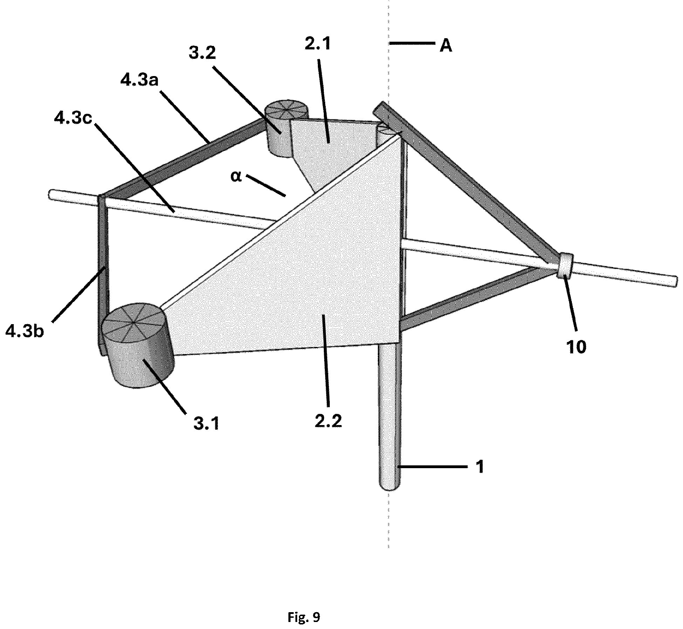

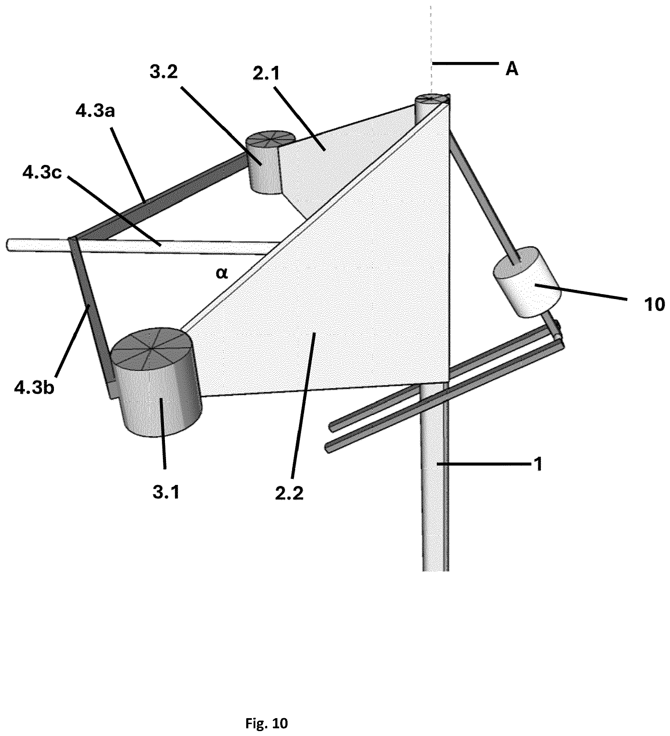

In an advantageous example of implementation, it additionally has a counterweight 10 placed on the opposite side of the mast 1 in relations to the wing 2.1, 2.2 (fig. 9, fig. 10).

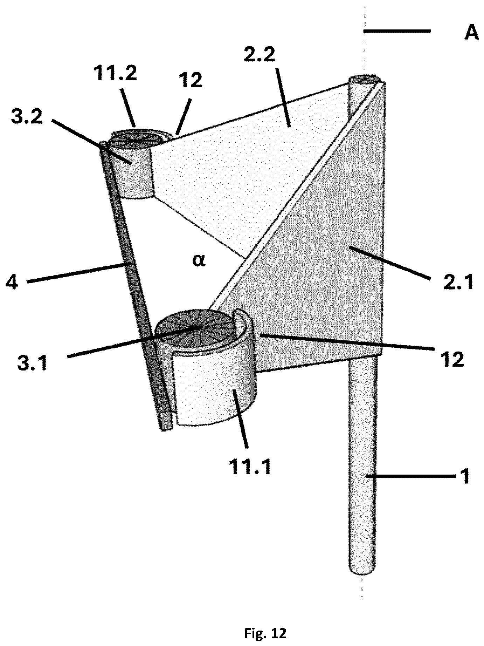

In an advantageous example of implementation, the rotor has an additional shield 11 on the windward side, which together with the wing forms a gap 12 through which the wind flow sets the rotor in motion, which additionally increases the speed of rotation of the rotor or rotors (fig. 12).

In an advantageous example of implementation, the number of wings and rotors is even.

In an advantageous example of implementation, the wings and rotors on both sides of the mast are symmetrically distributed and have the same dimension.

In an advantageous example of implementation, at least one wing has a shape approximating a section of a spherical polygon which is at least partially concave and/or which is at least partially convex.

## Claims

1. A wind turbine for generating electricity from wind, comprising a mast (1), at least one wing and at least one rotor for generating electricity, **characterized in that** the rotor is mounted close to the edge of the wing, which wing is essentially polygonal in shape, and the rotor is mounted on one of the edges of the wing distant from the mast (1), wherein the wing is mounted to the mast so that it rotates around the axis (A) of the mast.

2. The wind turbine according to claim 1, **characterized in that** it comprises at least two wings (2.1, 2.2) and at least one rotor (3.1, 3.2), wherein the wings located on opposite sides of the mast and are able to move relative to each other creating a variable angle (α) between them and position themselves on the leeward side of the mast according to the wind, and the value of the angle (α) is in the range of 30 to 160 degrees.

3. The wind turbine according to claims 1 and 2, **characterized in that** the wings are connected, directly or indirectly, by means of a connector (4) of variable or fixed length, which is located on the windward or leeward side of the turbine.

4. The wind turbine according to claim 3, **characterized in that** the connector (4) is a telescopic guide (4.1b) with a system of springs (4.1a) which, thanks to the elastic force and the wind force, change the angle (α) between the wings (2.1, 2.2).

5. The wind turbine according to claim 3, **characterized in that** the connector (4) is a rigid rail (4.2) running between the wings (2.1, 2.2), wherein the edges of the wings with the rotor (3.1, 3.2) are attached to the rail (4.2) movably by means of joints (5.1, 5.2) and move on the rail, relative to each other, by means of motors (6.1, 6.2) attached thereto.

6. The wind turbine according to claim 3, **characterized in that** the connector (4) is a boom (4.3c), attached at one side by the gooseneck (4.3d) to the mast (1) and loose at the other side, wherein the wings (2.1, 2.2) together with to the rotors (3.1, 3.2) are attached in an articulated manner to the brackets (4.3a, 4.3b) connecting them to the boom (4.3c), which brackets can move along the boom (4.3c).

7. The wind turbine according to claim 3, **characterized in that** the connector (4) comprises a rigid part (13) attached to the windward side and a system of ropes (12.1, 12.2) attached to the wings (2.1, 2.2) on one side and on the other side to the rope tensioning system (14).

8. The wind turbine according to any of the claims 1 to 7, **characterized in that** the rotor (3.1, 3.2) generating the current is a vertical rotor and is mounted relative to the wing (2.1, 2.2) in such a way that a part of the rotor with blades protrudes beyond the outline of the wing and has direct exposure to the airflow directed to the rotor by the turbine wing, and the other part of the rotor with blades is hidden behind the wing and has no direct exposure to the airflow directed to the rotor by the wing.

9. The wind turbine according to any of the claims 1 to 8, **characterized in that** the wing (2.1, 2.2) is made of a rigid material.

10. The wind turbine according to any of the claims 1 to 9, **characterized in that** the wing (2.1, 2.2) is made of flexible material of the canvas type, with additional reinforcements in the form of frames (7.1, 7.2) crowning the wing along its perimeter.

11. The wind turbine according to any of the claims 1 to 10, **characterized in that** the wing (2.1, 2.2) is equipped with additional gutters (8.1, 8.2) directing the wind towards the rotors, extending along the sides of the wing between the mast (1) and the rotor (3.1, 3.2).

12. The wind turbine according to any of the claims 1 to 11, **characterized in that** additional rails (9) are attached to the mast (1), to which rails the wing (2.1, 2.2) is attached.

13. The wind turbine according to any of the claims 1 to 12, **characterized in that** it additionally has a counterweight (10) placed on the opposite side of the mast (1) in relation to the wing (2.1, 2.2).

14. The wind turbine according to any of the claims 1 to 13, **characterized in that** the rotor has an additional shield (11) on the windward side, which together with the wing forms a gap (12) through which the wind stream sets the rotor in motion, which additionally increases the speed of rotation of the rotor or rotors.

15. The turbine according to any of the claims 1 to 14, **characterized in that** at least partially, any wing (2.1, 2.2) has a shape approximating a section of a spherical polygon which is at least partially concave and/or which is at least partially convex.
